# EUROPEAN PATENT SPECIFICATION

(11) **EP 4 571 920 B1**
(45) Date of publication and mention of the grant of the patent: **18.11.2026**
(21) Application number: 23872949.5
(22) Date of filing: 21.09.2023
(51) Int. Cl.: H01M 10/0567, H01M 4/505, H01M 4/525, H01M 10/052, H01M 10/0568, H01M 10/0569

(54) **NON-AQUEOUS ELECTROLYTE AND LITHIUM SECONDARY BATTERY INCLUDING THE SAME**
NICHTWÄSSRIGES ELEKTROLYT UND DIESEN ENTHALTENDE LITHIUMSEKUNDÄRBATTERIE
ÉLECTROLYTE NON AQUEUX ET BATTERIE SECONDAIRE AU LITHIUM LE COMPRENANT

(30) Priority: 30.09.2022 KR 20220125851
(43) Date of publication of application: 18.06.2025
(73) Proprietor: LG Energy Solution, Ltd., Seoul 07335 (KR)
(72) Inventor: KIM, Hyung Tae, Daejeon 34122 (KR); LEE, Chul Haeng, Daejeon 34122 (KR); CHOI, Young Cheol, Daejeon 34122 (KR); LEE, Bo Ram, Daejeon 34122 (KR); YEOM, Chul Eun, Daejeon 34122 (KR); SONG, Chang Ik, Daejeon 34122 (KR)
(74) Representative: Hoffmann Eitle
(86) International application number: PCT/KR2023/014391
(87) International publication number: WO 2024/071832

(56) References cited:
- EP-A1- 4 550 507
- CN-A- 102 569 889
- CN-A- 102 569 889
- JP-B2- 3 680 454
- JP-B2- 3 680 454
- KR-A- 20210 060 330
- KR-A- 20210 060 330
- KR-A- 20210 064 175
- US-A1- 2014 212 755
- GURUPRASADAGOWDA, Y. K. ET AL.: "Tetrakis coumarin as efficient electrode material for rechargeable lithium ion battery", JOURNAL OF ELECTROANALYTICAL CHEMISTRY, vol. 908, no. 116081, 24 January 2022 (2022-01-24), pages 1 - 5, XP086972700, DOI: 10.1016/j.jelechem.2022.116081

## Description

### TECHNICAL FIELD

The present invention relates to a non-aqueous electrolyte and a lithium secondary battery including the same.

### BACKGROUND ART

Recently, as the application fields of lithium secondary batteries have rapidly expanded to electricity, electronics, communications, and the supply of power to electronic apparatuses such as computers, as well as the power storage and supply for large-area apparatuses such as automobiles and power storage devices, high-capacity, high-output, and high-stability secondary batteries are increasingly demanded.

Particularly, in lithium secondary batteries for automotive applications, the high capacity, high power, and long lifespan properties are becoming important. In order to achieve the high capacity of lithium secondary batteries, it is contemplated to drive the lithium secondary batteries under a high voltage.

However, when a lithium secondary battery is driven under a high voltage, films or electrode surface structures formed on the surfaces of positive/negative electrodes may be deteriorated due to a side reaction caused by the deterioration of an electrolyte while the battery is being charged and discharged, and thus transition metal ions may be eluted from the surface of the positive electrode. The transition metal ions eluted as described above are electro-deposited on the negative electrode and degrade the passivation capability of a solid electrolyte interface (SEI) film of the negative electrode, thereby causing a problem of deterioration of the negative electrode. The deterioration phenomenon of a secondary battery tends to accelerate when the potential of a positive electrode increases, or when the battery is exposed to high temperatures.

In addition, when a lithium secondary battery is driven under the high voltage, there is a problem in that active oxygen is dissociated from a positive electrode active material included in a positive electrode, and the active oxygen causes a side reaction with an organic solvent such as a cyclic carbonate to occur in a non-aqueous electrolyte, generates a gas such as CO or CO₂, and continuously degrades battery durability.

EP 4 550 507 A1, CN 102569889 A, JP 3-680454 B2 and KR 2021-0060330 A disclose non-aqueous electrolytes comprising a lithium salt, an organic solvent, and an additive having a coumarin core.

### DISCLOSURE OF THE INVENTION

### TECHNICAL PROBLEM

An aspect of the present invention provides a non-aqueous electrolyte which forms a stable film on positive/negative electrodes, thereby reducing electrolyte side reactions, has an excellent O₂ scavenging effect, reduces gas generation at the time of activation, and is effective in reducing the resistance of a secondary battery.

Another aspect of the present invention provides a lithium secondary battery including the above-described non-aqueous electrolyte, thereby reducing gas generation at the time of activation, having reduced resistance, and having excellent lifespan performance.

### TECHNICAL SOLUTION

According to an aspect of the present invention, there is provided a non-aqueous electrolyte including a lithium salt, an organic solvent, and an additive, wherein the additive includes at least one compound selected from compounds represented by Formula 1-A and 1-B below.

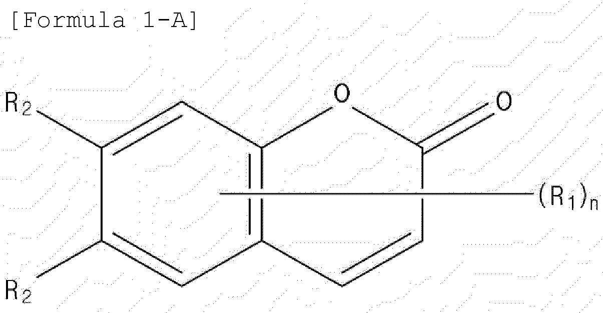

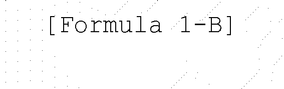

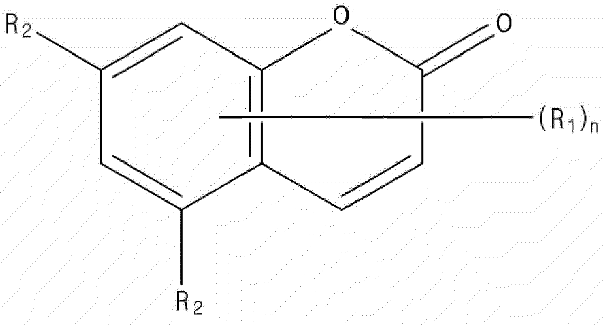

In Formulae 1-A and 1-B above, R₁ is a substituted or unsubstituted alkyl group, R₂ is a substituent represented by Formula 2 below, and n is an integer of 0 to 4.

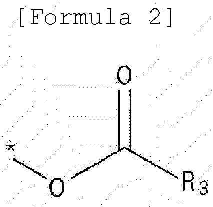

In Formula 2 above, R₃ is selected from among an unsubstituted alkyl group having 1 to 10 carbon atoms, an unsubstituted alkenyl group having 2 to 10 carbon atoms, and an unsubstituted alkynyl group having 2 to 10 carbon atoms, and * is a bonding site.

According to an aspect of the present invention, there is provided a lithium secondary battery which includes a positive electrode including a positive electrode active material, a negative electrode including a negative electrode active material, a separator interposed between the positive electrode and the negative electrode, and the above-described non-aqueous electrolyte.

### ADVANTAGEOUS EFFECTS

The non-aqueous electrolyte of the present invention is characterized by including, as an additive, a coumarin-based compound in which a substituent containing an ester group is substituted. The additive has excellent durability against positive/negative electrodes and enables formation of a film with reduced resistance, and thus, has effects of suppressing transition metal elution in a positive electrode and suppressing electrolyte side reactions in an electrode, and reduces gas generation at the time of activation. In addition, a reactive oxygen compound generated from a positive electrode and a coumarin structure included in the compound represented by Formulae 1-A and 1-B above are bonded, so that there is an effect(O₂ scavenging effect) of suppressing decomposition of the electrolyte and gas generation.

Therefore, a lithium secondary battery including the above-described non-aqueous electrolyte may have resistance properties and lifespan properties, which are simultaneously improved.

### MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

In the present specification, it should be understood that the terms "include," "comprise," or "have" are intended to specify the presence of stated features, numbers, steps, elements, or combinations thereof, but do not preclude the presence or addition of one or more other features, numbers, steps, elements, or combinations thereof.

Meanwhile, before describing the present invention, unless otherwise specified in the present invention, "*" refers to a connected portion (bonding site) between same or different atoms or end portions of formulas.

In addition, in the present specification, it will be understood that in the description of "a to b carbon atoms" herein, "a" and "b" each refer to the number of carbon atoms included in a specific functional group. That is, the functional group may include "a" to "b" carbon atoms. For example, an "alkyl group having 1 to 5 carbon atoms" refers to a C1-C5 alkyl group having 1 to 5 carbon atoms, that is, CH₃-, CH₃CH₂-, CH₃CH₂CH₂-, (CH₃)₂CH -, CH₃CH₂CH₂CH₂-, (CH₃)₂CHCH₂-, CH₃CH₂CH₂CH₂CH₂-, (CH₃)₂CHCH_{2C}H₂-, and the like.

In addition, in the present specification, an alkyl group, an alkenyl group, or an alkynyl group may all be substituted or unsubstituted. Unless otherwise defined, the term "substituted" means that at least one hydrogen bonded to carbon is substituted with an element other than hydrogen, and for example, it means being substituted with an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a cycloalkynyl group having to 12 carbon atoms, a heterocycloalkyl group having 3 to 12 carbon atoms, a heterocycloalkenyl group having 3 to 12 carbon atoms, a heterocycloalkynyl group having 2 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, and a haloaryl group having 6 to 20 carbon atoms.

Hereinafter, the present invention will be described in more detail.

### Non-aqueous electrolyte

The present invention relates to a non-aqueous electrolyte. More specifically, the non-aqueous electrolyte may be a non-aqueous electrolyte for a lithium secondary battery.

The non-aqueous electrolyte according to the present invention includes a lithium salt, an organic solvent, and an additive, wherein the additive includes at least one compound selected from compounds represented by Formulae 1-A and 1-B defined above.

### (1) Lithium salt

As the lithium salt used in the present invention, various lithium salts commonly used in a non-aqueous electrolyte for a lithium secondary battery may be used without limitation. For example, the lithium salt may include Li⁺ as a cation, and may include, as an anion, at least one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻, and (CF₃CF₂SO₂)₂N⁻.

Specifically, the lithium salt may include at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiB(C₂O₄)₂ (LiBOB), LiCF₃SO₃, LiN(SO₂F)₂ (LiFSI), LiCH₃SO₃, LiCF₃CO₂, LiCH₃CO₂, and LiN(SO₂CF₂CF₃)₂ (LiBETI). Specifically, the lithium salt may include at least one selected from the group consisting of LiBF₄, LiClO₄, LiPF₆, LiB(C₂O₄)₂ (LiBOB), LiCF₃SO₃, LiN(SO₂CF₃)₂ (LiTFSI), LiN(SO₂F)₂ (LiFSI), and LiN(SO₂CF₂CF₃)₂ (LiBETI).

In the non-aqueous electrolyte, the lithium salt may be included at a concentration of 0.5 M to 5 M, specifically 0.8 M to 4 M, and more specifically 0.8 M to 2.0 M. When the concentration of the lithium salt satisfies the above range, the Li⁺ transference number and the degree of dissociation of lithium ions are improved, so that output properties of the battery may be improved.

### (2) Organic solvent

The organic solvent is a non-aqueous solvent commonly used in a lithium secondary battery, and is not particularly limited as long as being capable of minimizing decomposition caused by an oxidation reaction and the like during charging and discharging of a secondary battery.

Specifically, the organic solvent may include at least one selected from the group consisting of a cyclic carbonate-based organic solvent, a linear carbonate-based organic solvent, a linear ester-based organic solvent, and a cyclic ester-based organic solvent.

Specifically, the organic solvent may include a cyclic carbonate-based solvent, a linear carbonate-based solvent, or a mixture thereof.

The cyclic carbonate-based organic solvent is a high-viscosity organic solvent having a high dielectric constant, and thus capable of readily dissociating a lithium salt in an electrolyte. Specifically, the cyclic carbonate-based organic solvent may include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and more specifically, may include ethylene carbonate.

In addition, the linear carbonate-based organic solvent is an organic solvent having low viscosity and a low dielectric constant. Specifically, the linear carbonate-based organic solvent may include at least one selected from the group consisting of dimethyl carbonate (DMC), diethyl carbonate (DEC), dipropyl carbonate, ethylmethyl carbonate (EMC), methylpropyl carbonate, and ethylpropyl carbonate, and more specifically, may include ethylmethyl carbonate (EMC).

The organic solvent may be a mixture of a cyclic carbonate-based organic solvent and a linear carbonate-based organic solvent. At this time, the cyclic carbonate-based organic solvent and the linear carbonate-based organic solvent may be mixed at a volume ratio of 10:90 to 40:60, specifically, a volume ratio of 10:90 to 30:70, and more specifically, a volume ratio of 15:85 to 30:70. When the mixing ratio of a cyclic carbonate-based solvent and a linear carbonate-based solvent satisfies the above range, high-dielectric constant and low-viscosity properties are simultaneously satisfied, and excellent ion conductivity properties may be achieved.

In addition, in order to prepare an electrolyte having high ion conductivity, the organic solvent may include at least one carbonate-based organic solvent selected from the group consisting of the cyclic carbonate-based organic solvent and the linear carbonate-based organic solvent and may further include at least one ester-based organic solvent selected from the group consisting of a linear ester-based organic solvent and a cyclic ester-based organic solvent.

The linear ester-based organic solvent may specifically include at least one selected from the group consisting of methyl acetate, ethyl acetate, propyl acetate, methyl propionate, ethyl propionate, propyl propionate, and butyl propionate.

In addition, the cyclic ester-based organic solvent may include at least one selected from the group consisting of γ-butyrolactone, γ-valerolactone, γ-caprolactone, σ-valerolactone, and ε-caprolactone.

Meanwhile, if necessary, the organic solvent may additionally use any organic solvent commonly used in a non-aqueous electrolyte without limitation. For example, at least one organic solvent among an ether-based organic solvent, a glyme-based solvent, and a nitrile-based solvent may be additionally included.

As the ether-based solvent, any one selected from the group consisting of dimethyl ether, diethyl ether, dipropyl ether, methyl ethyl ether, methyl propyl ether, ethyl propyl ether, 1,3-dioxolane (DOL), and 2,2-bis (trifluoromethyl)-1,3-dioxolane (TFDOL), or a mixture of two or more thereof may be used, but the present invention is not limited thereto.

The glyme-based solvent is a solvent having a higher dielectric constant and lower surface tension than those of a linear carbonate-based organic solvent, and having less reactivity with a metal, and may include at least one selected from the group consisting of dimethoxyethane (glyme, DME), diethoxyethane, digylme, tri-glyme, and tetra-glyme (TEGDME), but is not limited thereto.

The nitrile-based solvent may be one or more selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile,and 4-fluorophenylacetonitrile, but is not limited thereto.

### (3) Additive

The compound represented by Formula 1-A or Formula 1-B above is a coumarin-based compound including a substituent containing an ester group. The coumarin structure has higher reaction energy with active oxygen than an organic solvent such as ethylene carbonate, and thus, is bonded to active oxygen prior to the organic solvent when the active oxygen is generated. Therefore, when the compound of Formula 1-A or 1-B is included in the non-aqueous electrolyte, a reactive oxygen compound generated from the positive electrode and the coumarin structure included in the compound are bonded, so that there is an effect of suppressing decomposition of the electrolyte and gas generation.

In addition, the compound represented by Formula 1-A or 1-B may be rapidly reduced and decomposed at the time of initial activation and form a stable solid electrolyte interphase (SEI) film on the surface of a negative electrode. The coumarin structure included in the compound has strong reduction properties in the negative electrode, and a ring structure is ring-open at the time of initial activation of a lithium secondary battery, making it possible to form a polyethylene oxide-based polymer-type SEI layer. The polymer-type SEI layer has the advantage of being excellent in flexibility and resilience. In addition, the substituent (Formula 2) containing an ester group and included in the compound is preferred in terms of assisting in the formation of an SEI film having reduced resistance, helping to improve lithium ion conductivity due to oxygen contained therein when forming the SEI film, and promoting an SEI film formation reaction through the reduction in electron density of the substituent.

Therefore, a non-aqueous electrolyte which includes a compound of Formula 1-A or 1-B as an additive, the compound including both a coumarin structure and an ester-containing substituent, may reduce resistance against a negative electrode and form an SEI film excellent in durability, and thus, may improve lifespan performance and resistance properties of a lithium secondary battery including the non-aqueous electrolyte.

In terms of maximizing the aforementioned resistance reduction and lifetime performance improvement, while maximizing the aforementioned resistance reduction and lifetime performance gain, due to the excessive number of ester-containing substituents, n is an integer of 0 to 4. Meanwhile, n may be 0 or 1.

In Formula 1-A and Formula 1-B above, two R₂s may be the same as or different from each other.

If R₂ is substituted on coumarin as in Formula 1-A and Formula 1-B above, it is preferable in terms of promoting the SEI film formation reaction of the coumarin structure itself. Particularly, if two R₂s are substituted on coumarin as in Formula 1-A above, the SEI film formation reaction may be further promoted.

More specifically, the at least one compound represented by Formula 1-A and Formula 1-B above may include at least one selected from the group consisting of compounds represented by Formula 1-a below, Formula 1-b below, Formula 1-c below, and Formula 1-d below, and even more specifically, may include at least one selected from the group consisting of compounds represented by Formula 1-a below and Formula 1-b below.

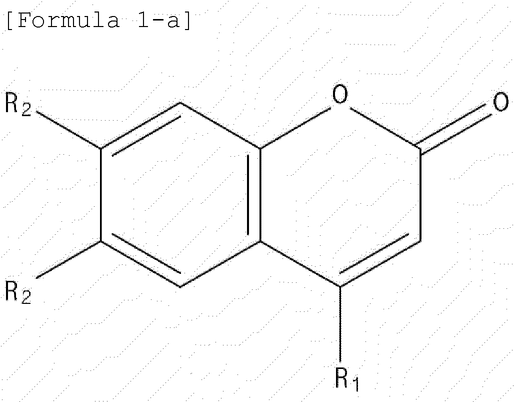

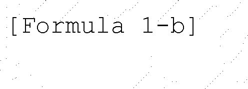

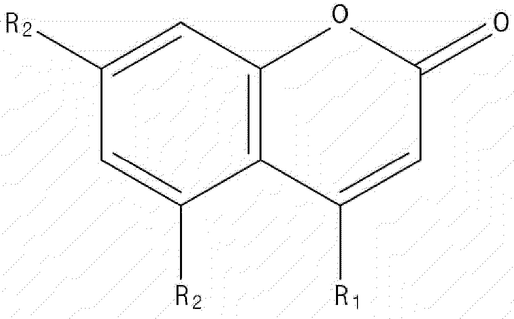

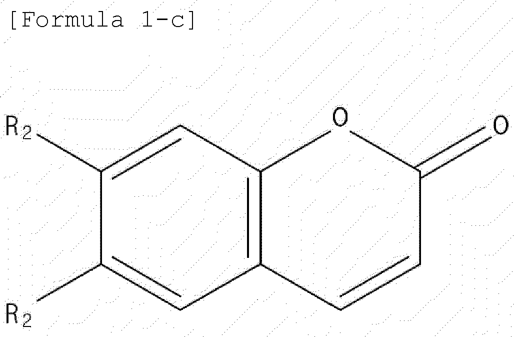

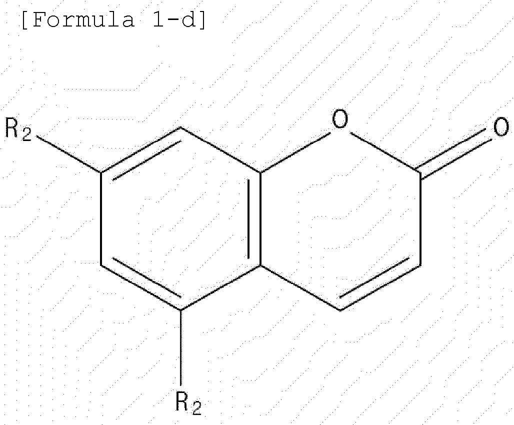

In Formula 1-a, Formula 1-b, Formula 1-c, and Formula 1-d above, R₁ and R₂ are as defined in Formula 1. In Formula 1-a and Formula 1-b above, two R₂s may be the same as or different from each other.

In addition, the at least one compound represented by Formula 1-A and Formula 1-B above may specifically include at least one selected from the group consisting of compounds represented by Formula 1-a-1 to Formula 1-a-6 below, Formula 1-b-1 to Formula 1-b-6 below, Formula 1-c-1 to Formula 1-c-2 below, and Formula 1-d-1 to Formula 1-d-2 below, more specifically, may include at least one selected from the group consisting of compounds represented by Formula 1-a-1 to Formula 1-a-6 below and Formula 1-b-1 to Formula 1-b-6 below, even more specifically, may include compounds represented by Formula 1-a-1 below and Formula 1-b-3 below, and even still more specifically, may include a compound represented by Formula 1-a-1 below.

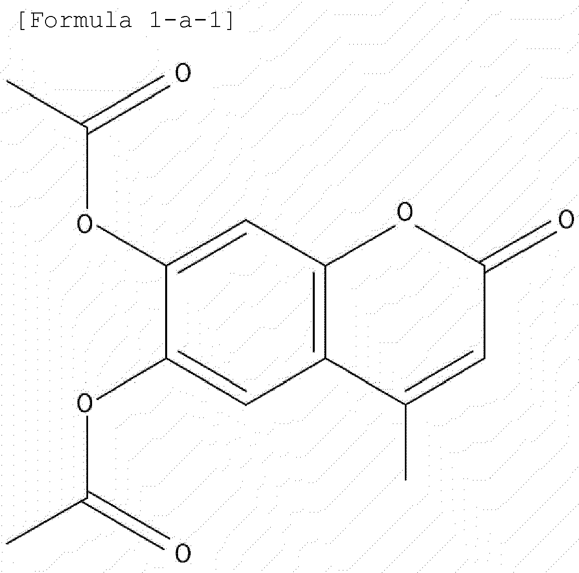

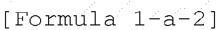

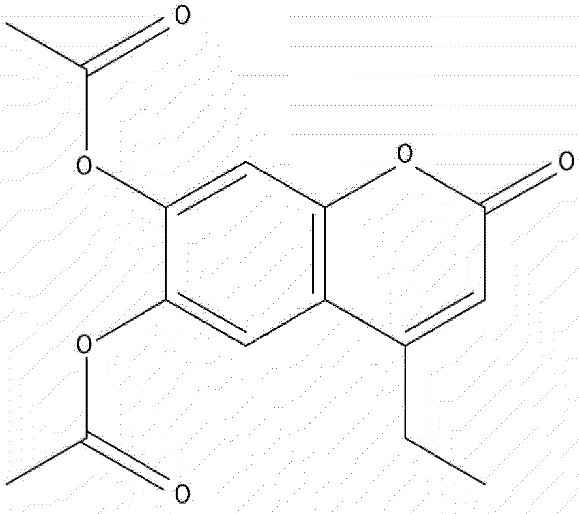

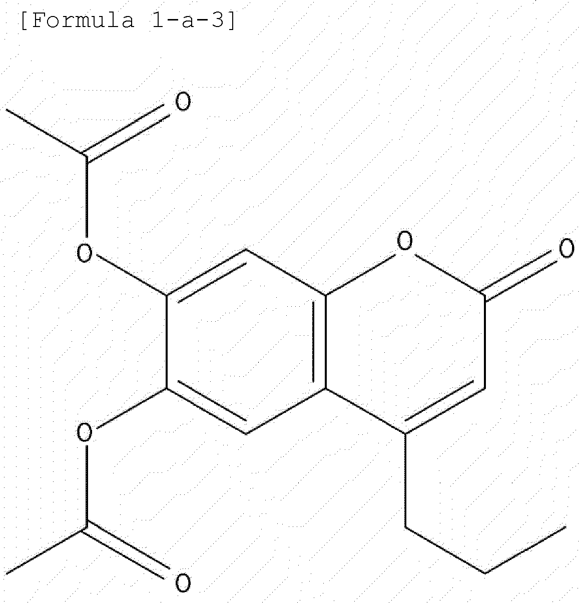

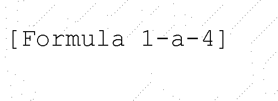

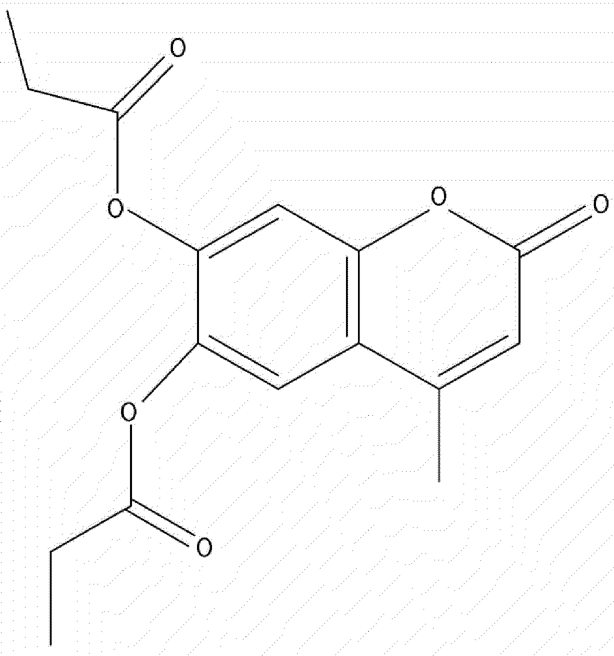

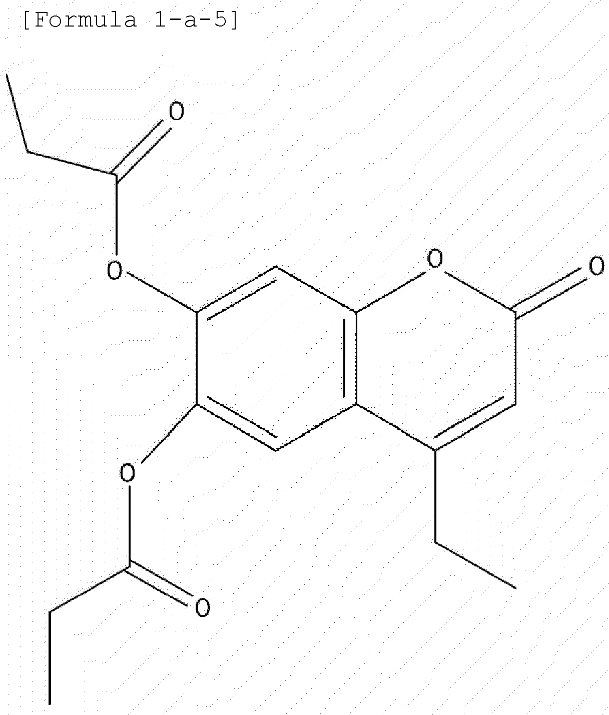

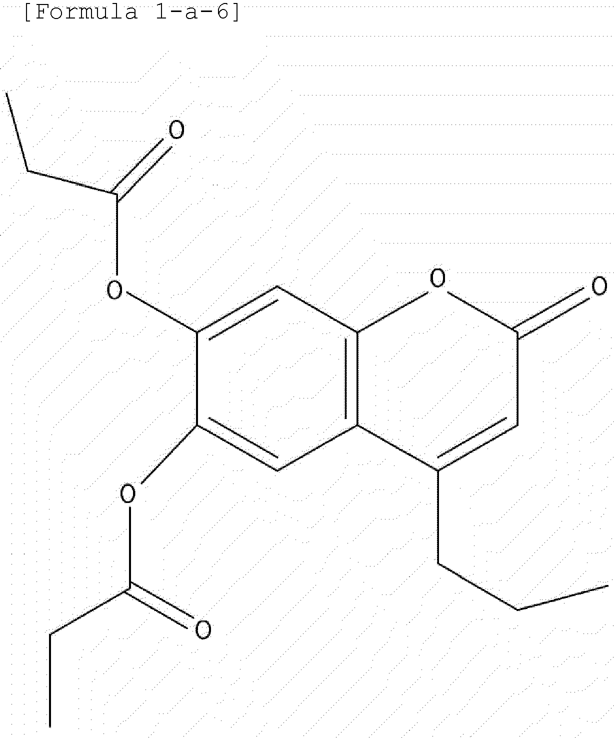

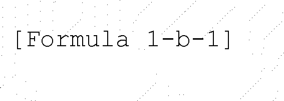

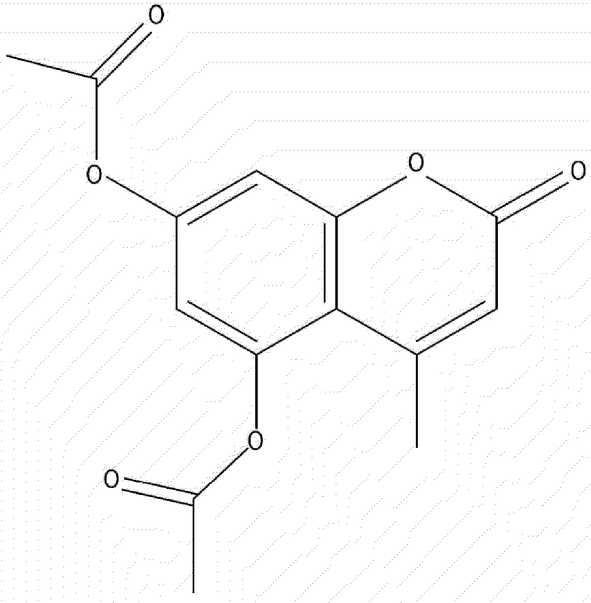

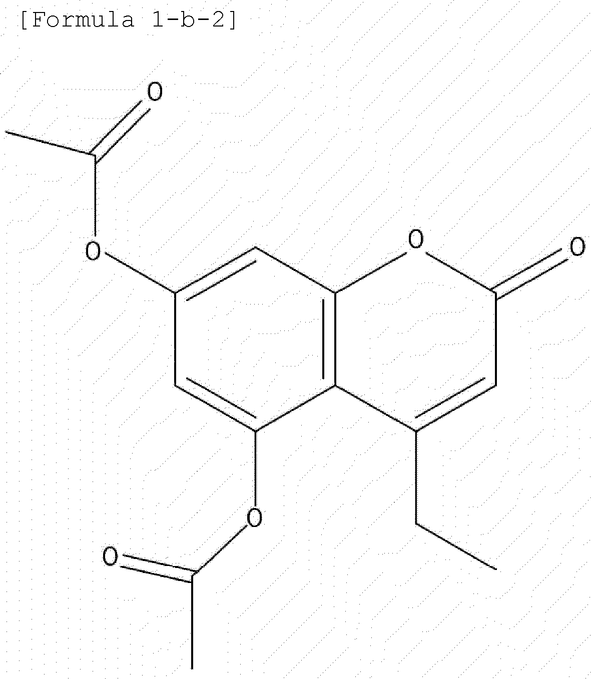

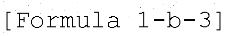

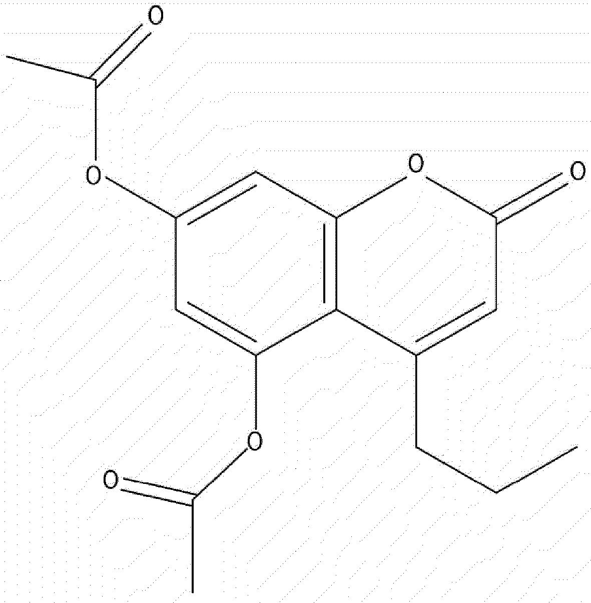

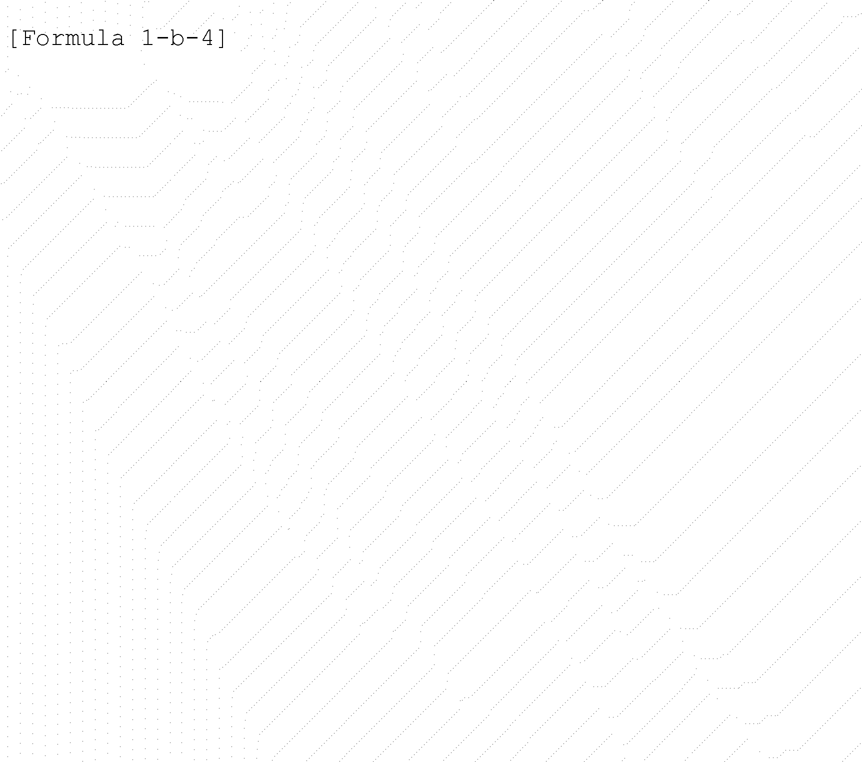

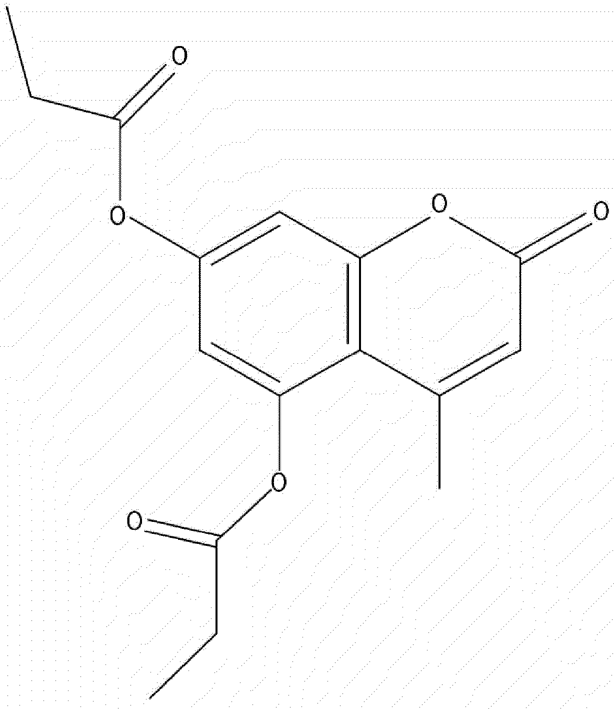

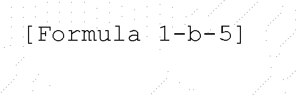

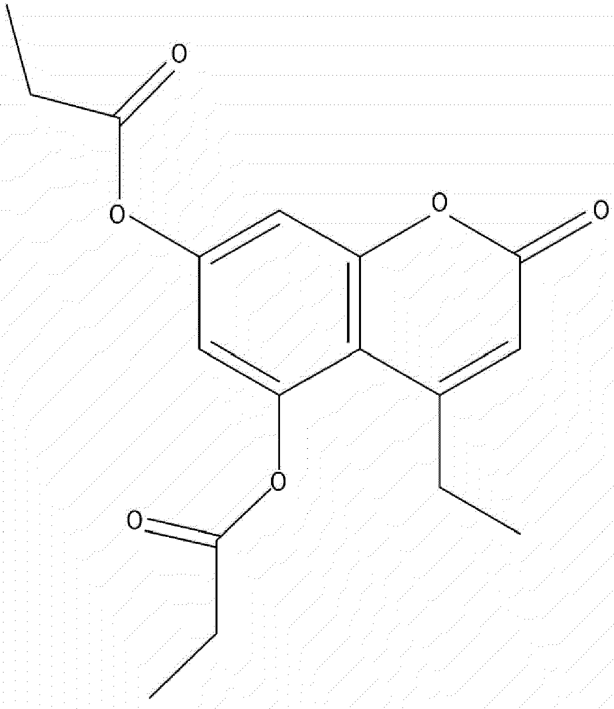

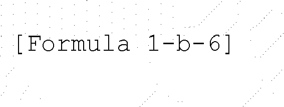

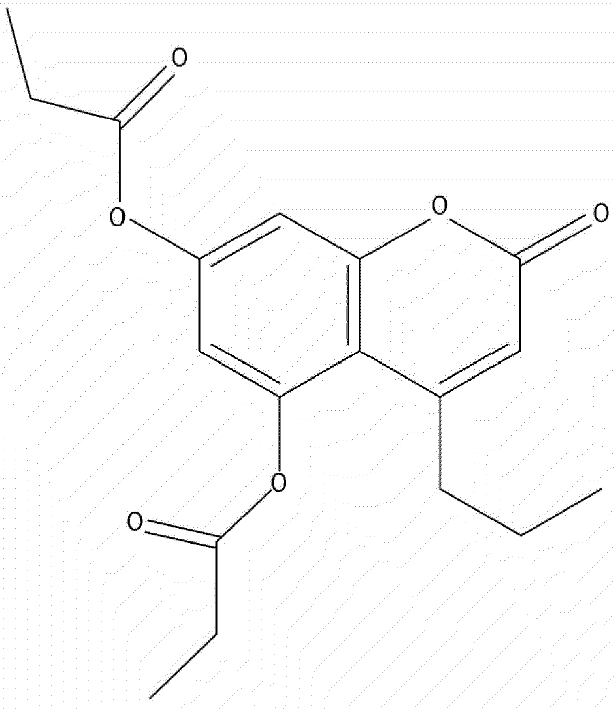

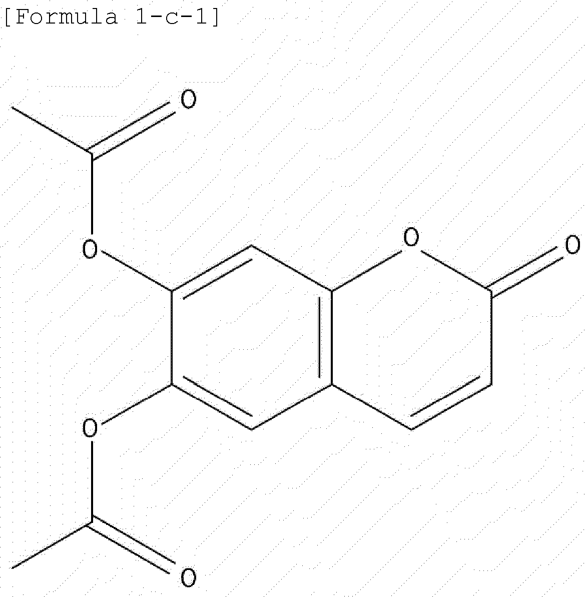

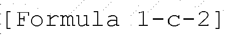

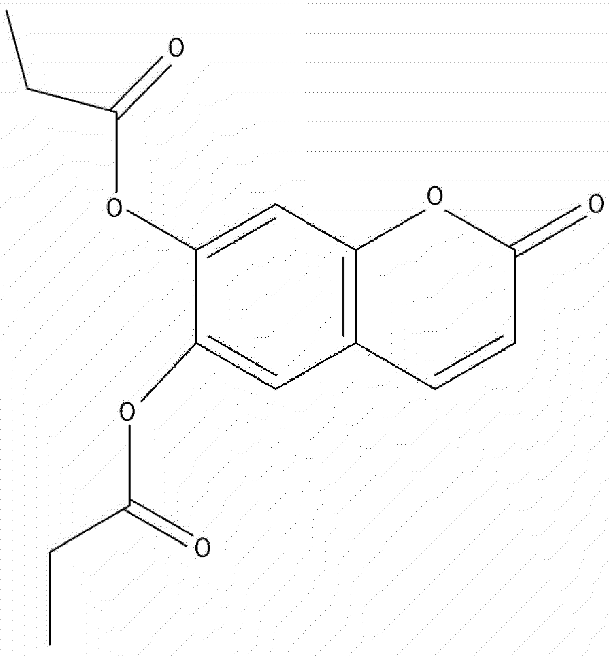

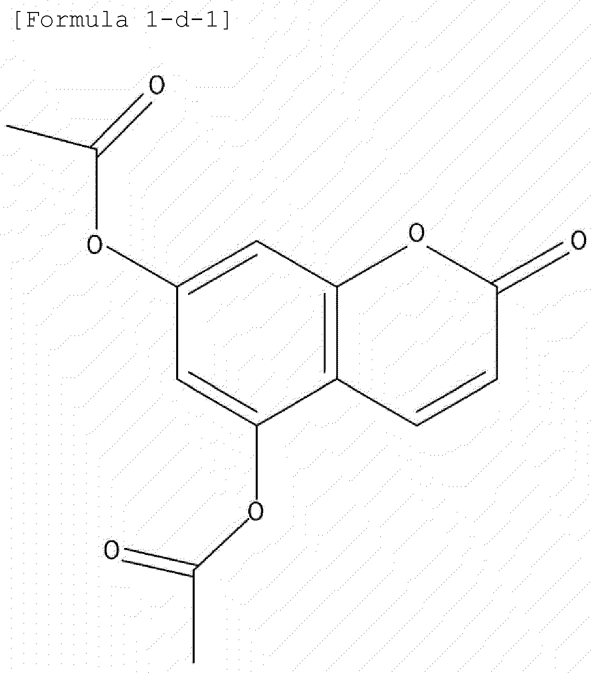

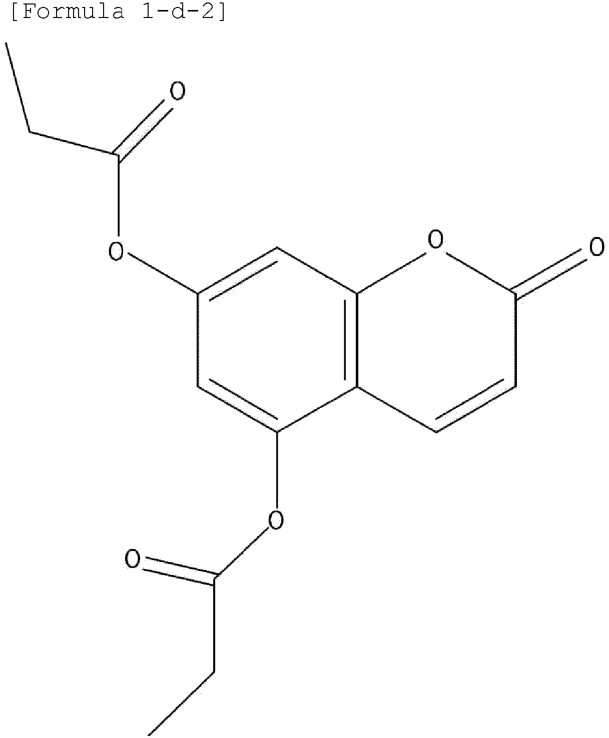

The at least one compound selected from compounds represented by Formula 1-A and 1-B above may be included in the non-aqueous electrolyte in an amount of 0.01 wt% to 10 wt%, preferably 0.01 wt% to 5 wt%, more preferably 0.05 wt% to 4.5 wt%, still more preferably 0.2 wt % to 1.5 wt%, and most preferably 0.4 wt% to 0.8 wt%. When the content satisfies the above range, it is preferable in terms of preventing an increase in resistance of a lithium secondary battery due to excessive addition and a corresponding decrease in life performance while fully exerting the aforementioned effect of protecting an electrode interface, and the effect of suppressing organic solvent decomposition and preventing side reactions.

The additive may further include an additional additive. The additional additive may be included in the non-aqueous electrolyte to prevent the non-aqueous electrolyte from decomposing in a high-output environment and causing a negative electrode to collapse, or to improve low-temperature high-rate discharge properties, high-temperature stability, overcharge prevention, the effect of suppressing battery expansion at high temperatures, and the like.

Specifically, the additional additive may be at least one selected from the group consisting of vinylene carbonate, vinyl ethylene carbonate, fluoroethylene carbonate, 1,3-propane sultone, propene sultone, succinonitrile, adiponitrile, ethylene sulfate, LiPO₂F₂, lithium difluorooxalatoborate (LiODFB), lithium bis-(oxalato)borate (LiBOB), 3-trimethoxysilanyl-propyl-N-aniline (TMSPa), and tris(trimethylsilyl)phosphite (TMSPi), and more specifically, may be at least one selected from the group consisting of vinylene carbonate and 1,3-propane sultone.

The additional additive may be included in an amount of 0.1 wt% to 15 wt% in the non-aqueous electrolyte.

### Lithium secondary battery

In addition, the present invention provides a lithium secondary battery including the above-described non-aqueous electrolyte.

Specifically, the lithium secondary battery includes a positive electrode including a positive electrode active material, a negative electrode including a negative electrode active material, a separator interposed between the positive electrode and the negative electrode, and the above-described non-aqueous electrolyte.

At this time, the lithium secondary battery of the present invention may be manufactured through a common method known in the art. For example, the lithium secondary battery of the present invention may be manufactured by forming an electrode assembly in which a positive electrode, a negative electrode, and a separator between the positive electrode and the negative electrode are sequentially stacked, followed by inserting the electrode assembly in a battery case, and then injecting the non-aqueous electrolyte according to the present invention thereto.

### (1) Positive electrode

The positive electrode includes a positive electrode active material.

The positive electrode may include a positive electrode current collector, and a positive electrode active material layer disposed on at least one surface of the positive electrode current collector. At this time, the positive electrode active material may be included in the positive electrode active material layer.

The positive electrode current collector is not particularly limited as long as having high conductivity without causing a chemical change in the battery. Specifically, the positive electrode current collector may include at least one selected from the group consisting of copper, stainless steel, aluminum, nickel, titanium, fired carbon, and an aluminum-cadmium alloy, and preferably aluminum.

The positive electrode current collector may typically have a thickness of 3 to 500 µm.

The positive electrode current collector may have fine irregularities formed on the surface thereof to improve the bonding force of the positive electrode active material. For example, the positive electrode current collector may be used in various forms such as a film, a sheet, a foil, a net, a porous body, a foam, and a non-woven body.

The positive electrode active material layer is disposed on at least one surface of the positive electrode current collector. Specifically, the positive electrode active material layer may be disposed on one surface or both surfaces of the positive electrode current collector.

The positive electrode active material layer includes a positive electrode active material.

The positive electrode active material is a compound capable of reversible intercalation and de-intercalation of lithium, and specifically, may include a lithium transition metal composite oxide including lithium and at least one transition metal selected from the group consisting of nickel, cobalt, manganese, and aluminum, and preferably a lithium transition metal composite oxide including lithium and a transition metal containing nickel, cobalt, and manganese.

For example, the lithium transition metal composite oxide may be a lithium-manganese-based oxide (e.g., LiMnO₂, LiMn₂O₄), a lithium-cobalt-based oxide (e.g., LiCoO₂), a lithium-nickel-based oxide (e.g., LiNiO₂), a lithium-nickel-manganese-based oxide (e.g., LiNi_{1-Y}Mn_{Y}O₂ where 0<Y<1, LiMn_{2-z}Ni_{z}O₄ where 0 < Z < 2), a lithium-nickel-cobalt-based oxide (e.g., LiNi_{1-Y1}Co_{Y1}O₂ where 0<Y1<1), a lithium-manganese-cobalt-based oxide (e.g., LiCo_{1-Y2}Mn_{Y2}O₂ where 0<Y2<1, LiM_{n2-z1}Co_{z1}O₄ where 0 < Z1<2), a lithium-nickel-manganese-cobalt-based oxide (e.g., Li(NiₚCo_{q}Mnᵣ₁)O₂ where 0<p<1, 0<q<1, 0<r1<1, and p+q+r1=1, or Li(Niₚ₁Co_{q1}Mnᵣ₂)O₄ where 0<p1<2, 0<q1<2, 0<r2<2, and p1+q1+r2=2), or a lithium-nickel-cobalt-transition metal (M) oxide (e.g., Li(Niₚ₂Co_{q2}Mnᵣ₃A_{S2})O₂ where M is selected from the group consisting of Al, Fe, V, Cr, Ti, Ta, Mg, and Mo, and p2, q2, r3, and s2 are each an atomic fraction of independent elements, where 0<p2<1, 0<q2<1, 0<r3<1, 0<s2<1, and p2+q2+r3+s2=1), and any one thereof or two or more thereof may be included. Among these, in terms of being able to increase the capacity and stability of a battery, the lithium transition metal composite oxide may be LiCoO₂, LiMnO₂, LiNiO₂, a lithium nickel-manganese-cobalt oxide (e.g., Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂), or a lithium-nickel-cobalt-aluminum oxide (e.g., Li(Ni_{0.8}Co_{0.15}Al_{0.05})O₂). When considering a remarkable effect of improvement according to the control of types and content ratios of constituent elements forming a lithium transition metal composite oxide, the lithium transition metal composite oxide may be Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂, and any one thereof or a mixture of two or more thereof may be used.

More specifically, the positive electrode active material is a lithium transition metal composite oxide, and may include in an amount of 60 mol% or greater of nickel with respect to the total number of moles of transition metals included in the lithium transition metal composite oxide. Specifically, the positive electrode active material is a lithium transition metal composite oxide, and the transition metal includes nickel, and at least one selected from manganese, cobalt, and aluminum, and may include the nickel in an amount of 60 mol% or greater, specifically 60 mol% to 90 mol%, with respect to the total number of moles of the transition metals. When the lithium transition metal composite oxide with a high content of nickel is used together with the above-described non-aqueous electrolyte solution, it is preferable in terms of reducing gaseous by-products generated due to structural collapse.

In addition, the positive electrode active material may include a lithium transition metal composite oxide represented by Formula 5 below.

[Formula 5] Li₁₊ₓ(NiₐCo_{b}Mn_{c}M_{d})O₂

In Formula 5 above, M is one or more selected from W, Cu, Fe, V, Cr, Ti, Zr, Zn, Al, In, Ta, Y, La, Sr, Ga, Sc, Gd, Sm, Ca, Ce, Nb, Mg, B, and Mo, and 1+x, a, b, c, and d are each an atomic fraction of an independent element, where 0≤x≤0.2, 0.50≤a<1, 0<b≤0.25, 0<c≤0.25, 0≤d≤0.1, and a+b+c+d=1.

Preferably, the a, b, c, and d may respectively be 0.70≤a≤0.95, 0.025≤b≤0.20, 0.025≤c≤0.20, and 0≤d≤0.05.

In addition, the a, b, c, and d may respectively be 0.80≤a≤0.95, 0.025≤b≤0.15, 0.025≤c≤0.15, and 0≤d≤0.05.

In addition, the a, b, c, and d may respectively be 0.85≤a≤0.90, 0.05≤b≤0.10, 0.05≤c≤0.10, and 0≤d≤0.03.

Meanwhile, the positive electrode active material may include a hyper-lithium manganese-rich oxide containing at least 50 mol% of Mn among all metals excluding lithium, and h aving a molar ratio of lithium to transition metals greater than 1.

When the hyper-lithium manganese-rich oxide is used as a positive electrode active material, active oxygen is generated while the hyper-lithium manganese-rich oxide of a rock salt phase is being decomposed during an initial activation process. The active oxygen attacks and decomposes an organic solvent such as ethylene carbonate, and generates gases and resistor by-products, thereby degrading battery physical properties. However, in the present invention, since the non-aqueous electrolyte includes a compound of Formula 1-A and/or a compound of Formula 1-B having higher reactivity with active oxygen than an organic solvent, the active oxygen generated in the initial activation process may be first bonded to the compound earlier than the organic solvent, thereby minimizing side effects caused by decomposition of the organic solvent.

The hyper-lithium manganese-rich oxide may be a compound represented by Formula 6 below.

[Formula 6] Lip₁₊ₛ[NiₜCoᵤMnᵥM¹_{w}]O_{2+z}

In Formula 6 above, M¹ is one or more elements selected from W, Cu, Fe, V, Cr, Ti, Zr, Zn, Al, In, Ta, Y, La, Sr, Ga, Sc, Gd, Sm, Ca, Ce, Nb, Mg, B and Mo. In addition, in Formula 6 above, it may be that 0.05≤s≤1, 0≤t≤0.5, 0≤u≤0.3, 0.5≤v<1.0, 0≤w≤0.2, and 0≤z≤1, preferably that 0.05≤s≤1, 0.1≤t≤0.5, 0≤u≤0.1, 0.5≤v<1.0, 0≤w≤0.2, and 0≤z≤1, and more preferably that 0.10≤s≤0.50, 0.1≤t≤0.5, 0≤u≤0.1, 0.6≤v<1.0, 0≤w≤0.1, and 0≤z≤0.50.

More specifically, the hyper-lithium manganese-rich oxide may be a compound represented by Formula 6-1 below.

[Formula 6-1] X Li₂MnO₃ ·(1-X)Li[Ni_{1-y-2-w}Mn_{y}Co_{z}M¹_{w}]O₂

In Formula 6-1 above, M¹ is one or more elements selected from W, Cu, Fe, V, Cr, Ti, Zr, Zn, Al, In, Ta, Y, La, Sr, Ga, Sc, Gd, Sm, Ca, Ce, Nb, Mg, B and Mo. In addition, in Formula 6-1 above, it may be that 0.1≤X≤0.5, 0.5≤y<1, 0≤z≤0.3, and 0≤w≤0.2, preferably that 0.2≤X≤0.5, 0.5≤y<1, 0≤z≤0.1, and 0≤w≤0.2, and more preferably that 0.3≤X≤0.5, 0.6≤y<1, 0≤z≤0.1, and 0≤w≤0.2.

The positive electrode active material may be included in the positive electrode active material layer in an amount of 80 wt% to 99 wt%, preferably 92 wt% to 98.5 wt%, in consideration of exerting sufficient capacity of the positive electrode active material.

The positive electrode active material layer may further include a binder and/or a conductive material together with the above-described positive electrode active material.

The binder is a component for assisting in binding of an active material, a conductive material, and the like, and binding to a current collector. Specifically, the binder may include at least one selected from the group consisting of a polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber, and fluorine rubber, and include preferably polyvinylidene fluoride.

The binder may be included in the positive electrode active material layer in an amount of 1 wt% to 20 wt%, preferably 1.2 wt% to 10 wt%, in terms of securing sufficient binding force between components such as a positive electrode active material.

The conductive material may be used to assist and improve conductivity in the secondary battery, and is not particularly limited as long as having conductivity without causing a chemical change. Specifically, the positive electrode conductive material may include graphite such as natural graphite or artificial graphite; a carbon-based material such as carbon black, acetylene black, Ketjen black, channel black, furnace black, lamp black, and thermal black; conductive fiber such as carbon fiber and metal fiber; a conductive tube such as a carbon nanotube; fluorocarbon; metal powder such as aluminum powder and nickel powder; a conductive whisker such as zinc oxide and potassium titanate; a conductive metal oxide such as titanium oxide; and a polyphenylene derivative, and may preferably include carbon black in terms of improving conductivity.

In terms of securing sufficient electrical conductivity, the conductive material may be included in the positive electrode active material layer in an amount of 1 wt% to 20 wt%, preferably 1.2 wt% to 10 wt%.

The thickness of the positive electrode active material layer may be 30 µm to 400 µm, preferably 40 µm to 110 µm.

The positive electrode may be manufactured by coating the positive electrode current collector with a positive electrode slurry including a positive electrode active material, and selectively, a binder, a conductive material, and a solvent for forming a positive electrode slurry, and then drying and rolling the resultant.

The solvent for forming a positive electrode slurry may include an organic solvent such as N-methyl-2-pyrrolidone (NMP). The solid content of the positive electrode slurry may be 40 wt% to 90 wt%, specifically 50 wt% to 80 wt%.

### (2) Negative electrode

The negative electrode may oppose the positive electrode.

The negative electrode includes a negative electrode active material.

The negative electrode may include a negative electrode current collector, and a negative electrode active material layer disposed on at least one surface of the negative electrode current collector. At this time, the negative electrode active material may be included in the negative electrode active material layer.

The negative electrode current collector is not particularly limited as long as having conductivity without causing a chemical change in the battery. Specifically, copper, stainless steel, aluminum, nickel, titanium, fired carbon, copper or stainless steel that is surface-treated with one of carbon, nickel, titanium, and silver, or an aluminum-cadmium alloy, may be used as the negative electrode current collector.

The negative electrode current collector may typically have a thickness of 3 to 500 µm.

The negative electrode current collector may have fine irregularities formed on the surface thereof to improve the bonding force of the negative electrode active material. For example, the negative electrode current collector may be used in various forms such as a film, a sheet, a foil, a net, a porous body, a foam, and a non-woven body.

The negative electrode active material layer is disposed on at least one surface of the negative electrode current collector. Specifically, the negative electrode active material layer may be disposed on one surface or both surfaces of the negative electrode current collector.

The negative electrode active material layer includes a negative electrode active material.

The negative electrode active material is a material capable of reversibly intercalating/de-intercalating lithium ions, and may include at least one selected from the group consisting of a carbon-based active material, a (semi-)metal-based active material, and a lithium metal, and specifically, may include at least one selected from a carbon-based active material and a (semi-)metal-based active material.

The carbon-based active material may include at least one selected from the group consisting of artificial graphite, natural graphite, hard carbon, soft carbon, carbon black, graphene, and fibrous carbon, and may preferably include at least one selected from the group consisting of artificial graphite and natural graphite.

The average particle diameter (D₅₀) of the carbon-based active material may be 10 µm to 30 µm, preferably 15 µm to 25 µm, in terms of ensuring structural stability during charge/discharge and decreasing side reactions with an electrolyte solution.

Specifically, the (semi-)metal-based active material may include at least one (semi-)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, Sn, an alloy of lithium and at least one (semi-)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn, an oxide of at least one (semi-)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn, lithium titanium oxide (LTO), and lithium vanadium oxide.

More specifically, the (semi-)metal-based active material may include a silicon-based active material.

The silicon-based active material may include a compound represented by SiOₓ wherein 0≤x<2. Since SiO₂ does not react with lithium ions, thereby not being able to store lithium, it is preferable that x is in the above range, and more preferably, the silicon-based active material may be SiO.

The average particle diameter (D₅₀) of the silicon-based active material may be 1 µm to 30 µm, preferably 2 µm to 15 µm, in terms of ensuring structural stability during charge/discharge and decreasing side reactions with an electrolyte solution.

The negative electrode active material may be included in an amount of 60 wt% to 99 wt%, preferably 75 wt to 95 wt% in the negative electrode active material layer.

The negative electrode active material layer may further include a binder and/or a conductive material together with the negative electrode active material.

At this time, the binder is used to improve battery performance by improving adhesion between the negative electrode active material layer and the negative electrode current collector, and may include, for example, at least any one selected from the group consisting of polyvinylidenefluoride-hexafluoropropylene copolymer (PVDF-co-HFP), polyvinylidenefluoride (PVDF), polyacrylonitrile, polymethylmethacrylate, polyvinylalcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluorine rubber, and a material having a hydrogen thereof substituted with Li, Na, or Ca, and may also include various copolymers thereof.

The binder may be included in an amount of 0.5 wt% to 10 wt%, preferably 1 wt% to 5 wt%, in the negative electrode active material layer.

The conductive material is not particularly limited as long as having conductivity without causing a chemical change in the battery, and for example, graphite such as natural graphite or artificial graphite; a carbon-based material such as carbon black, acetylene black, Ketjen black, channel black, furnace black, lamp black, and thermal black; conductive fiber such as carbon fiber and metal fiber; a conductive tube such as a carbon nanotube; fluorocarbon; metal powder such as aluminum powder, and nickel powder; a conductive whisker such as zinc oxide and potassium titanate; a conductive metal oxide such as titanium oxide; and a conductive material such as a polyphenylene derivative, may be used.

The conductive material may be included in an amount of 0.5 wt% to 10 wt%, preferably 1 wt% to 5 wt%, in the negative electrode active material layer.

The thickness of the negative electrode active material layer may be 10 µm to 100 µm, preferably 50 µm to 80 µm.

The negative electrode may be manufactured by coating at least one surface of a negative electrode current collector with a negative electrode slurry including a negative electrode active material, a binder, a conductive material, and/or a solvent for forming a negative electrode slurry, and then drying and rolling the resultant.

The solvent for forming a negative electrode slurry may include, for example, at least one selected from the group consisting of distilled water, N-methyl-2-pyrrolidone (NMP), ethanol, methanol, and isopropyl alcohol, preferably distilled water, in terms of facilitating the dispersion of the negative electrode active material, the binder, and/or the conductive material. The solid content of the negative electrode slurry may be 30 wt% to 80 wt%, specifically 40 wt% to 70 wt%.

### (3) Separator

In addition, as the separator, a common porous polymer film typically used as a separator, for example, a porous polymer film made of a polyolefin-based polymer, such as an ethylene homopolymer, a propylene homopolymer, an ethylene/butene copolymer, an ethylene/hexene copolymer, and an ethylene/methacrylate copolymer may be used alone, or a laminate thereof may be used. Alternatively, a common porous non-woven fabric, for example, a non-woven fabric made of glass fiber having a high melting point or polyethylene terephthalate fiber may be used, but the present invention is not limited thereto. Also, a coated separator including a ceramic component or a polymer material may be used to secure heat resistance or mechanical strength, and may be selectively used in a single-layered or a multi-layered structure.

The external shape of the lithium secondary battery of the present invention is not particularly limited, but may be a cylindrical shape using a can, a square shape, a pouch shape, or a coin shape.

Hereinafter, the present invention will be described in more detail with reference to specific examples. However, the following examples are for illustrative purposes only to facilitate the understanding of the present invention, and do not limit the scope of the present invention.

### Examples and Comparative Examples

### Example 1

### (Preparation of non-aqueous electrolyte)

As an organic solvent, a mixture in which ethylene carbonate (EC) and ethyl methylcarbonate (EMC) were mixed at a volume ratio of 30:70 was used.

To the organic solvent, LiPF₆ as a lithium salt, a compound represented by Formula 1-a-1 below, and vinylene carbonate and 1,3-propane sultone as additional additives were added to prepare a non-aqueous electrolyte.

The LiPF₆ was included at a concentration of 1.0 M in the non-aqueous electrolyte.

The compound represented by Formula 1-a-1 below was included in an amount of 0.5 wt% in the non-aqueous electrolyte.

In addition, the non-aqueous electrolyte included vinylene carbonate and 1,3-propanesultone in an amount of 0.5 wt% each.

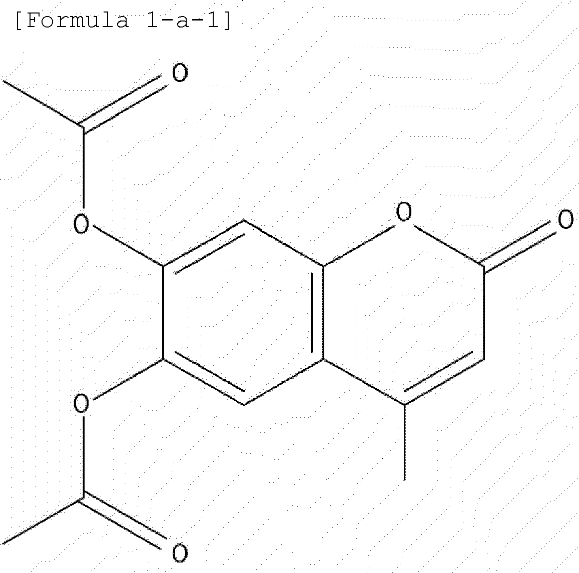

### (Manufacturing of lithium secondary battery)

A positive electrode active material (Li_{1.35}[Ni_{0.35}Mn_{0.65}]O₂, a hyper-lithium manganese-rich oxide), a conductive material (carbon black) and a binder (polyvinylidene fluoride) were added at a weight ratio of 96.0:1.5:2.5 to N-methyl-2-pyrrolidone (NMP), which is a solvent, to prepare a positive electrode slurry (solid content of 60 wt%). The positive electrode slurry was applied on one surface of a positive electrode current collector (Al thin film) having a thickness of 13.5 µm, and then dried and roll-pressed to manufacture a positive electrode.

A negative electrode active material (graphite), a conductive material (carbon black) and a binder (styrene-butadiene rubber) were added at a weight ratio of 97:1:2 to distilled water, which is a solvent, to prepare a negative electrode slurry (solid content of 60 wt%). The negative electrode slurry was applied on one surface of a negative electrode current collector (Cu thin film) having a thickness of 6 µm, and then dried and roll-pressed to manufacture a negative electrode.

In a dry room, a polyethylene porous film separator was interposed between the positive electrode and the negative electrode manufactured above, and then the prepared non-aqueous electrolyte was injected thereto to manufacture a secondary battery.

### Example 2

A non-aqueous electrolyte and a secondary battery were manufactured in the same manner as in Example 1, except that 0.3 wt% of the compound represented by Formula 1-a-1 above was added to the non-aqueous electrolyte in Example 1.

### Example 3

A non-aqueous electrolyte and a secondary battery were manufactured in the same manner as in Example 1, except that 1.0 wt% of the compound represented by Formula 1-a-1 above was added to the non-aqueous electrolyte in Example 1.

### Example 4

A non-aqueous electrolyte and a secondary battery were manufactured in the same manner as in Example 1, except that a compound represented by Formula 1-b-3 below was added, instead of the compound represented by Formula 1-a-1 above, in an amount of 0.5 wt% to the non-aqueous electrolyte.

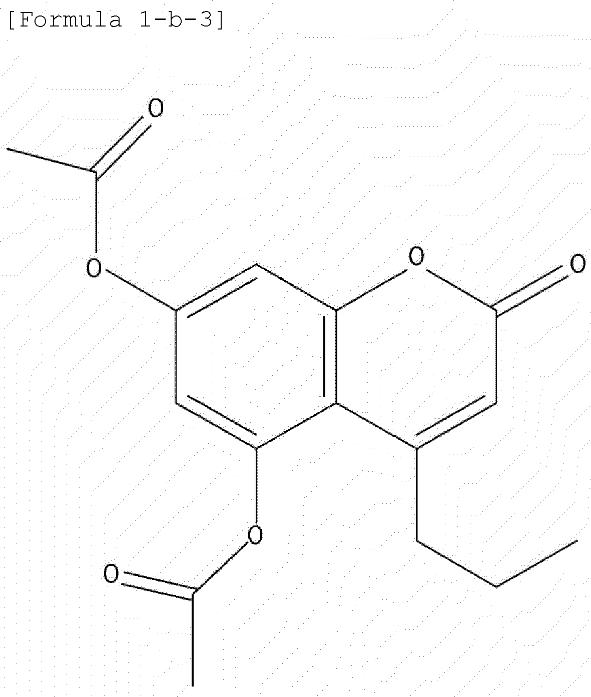

### Comparative Example 1

A non-aqueous electrolyte and a secondary battery were manufactured in the same manner as in Example 1, except that the compound represented by Formula 1-a-1 above was not added.

### Comparative Example 2

A non-aqueous electrolyte and a secondary battery were manufactured in the same manner as in Example 1, except that a compound represented by Formula X below was added, instead of the compound represented by Formula 1-a-1 above, in an amount of 0.5 wt% to the non-aqueous electrolyte.

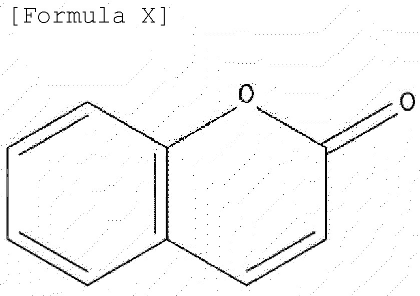

### Comparative Example 3

A non-aqueous electrolyte and a secondary battery were manufactured in the same manner as in Example 1, except that a compound represented by Formula Y below was added, instead of the compound represented by Formula 1-a-1 above, in an amount of 0.5 wt% to the non-aqueous electrolyte.

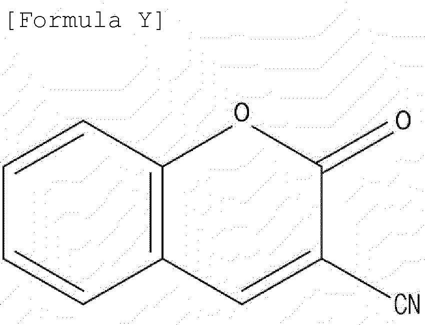

### Experimental Examples

### Experimental Example 1: Cycle capacity retention rate evaluation

The lithium secondary batteries of Examples 1 to 4 and Comparative Examples 1 to 3 manufactured above were charged to 4.35 V and 1/40 C under the conditions of CC/CV and 0.33 C at 45 °C using an electrochemical charge/discharge device, and then discharged to 2.0 V under the conditions of CC and 0.33 C, which was set to one cycle, and 150 cycles of the charge/discharge were performed to measure a capacity retention rate.

The capacity retention rate was calculated by the following equation, and the results are shown in Table 1 below. 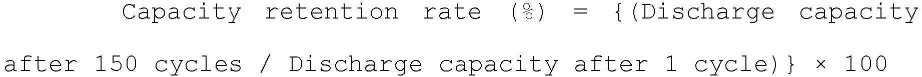 Capacity retention rate (%) = { (Discharge capacity after 150 cycles / Discharge capacity after 1 cycle)} × 100

### Experimental Example 2: Resistance evaluation

The lithium secondary batteries of Examples 1 to 4 and Comparative Examples 1 to 3 manufactured above were charged to 4.35 V and 1/40 C under the conditions of CC/CV and 0.33 C at 45 °C, and then discharged to 2.0 V under the conditions of CC and 0.33 C, which was set to one cycle, and 150 cycles of the charge/discharge were performed.

After one cycle of the charge/discharge, the discharge capacity after one1 cycle was measured using an electrochemical charge/discharge device, the SOC was adjusted to SOC 50%, and then a pulse of 2.5 C was applied for 10 seconds to calculate the initial resistance through the difference between the voltage before the pulse application and the voltage after the application.

After 150 cycles of the charge/discharge, the resistance after 150 cycles was calculated by the same method as the above method. The results are shown in Table 1 below.

### Experimental Example 3: Gas generation amount measurement

The secondary batteries of Examples 1 to 4 and Comparative Examples 1 to 3 were charged to 4.35 V and 1/40 C under the conditions of CC/CV and 0.33 C at 45 °C, and then discharged to 2.0 V under the conditions of CC and 0.33 C to perform one cycle of charge/discharge, which ended in the discharge state, and then the amount of gas generation was measured using gas chromatography mass spectrometry (GC-MS).

**[Table 1]**

| | Experimental Example 1 | Experimental Example 2 | | Experimental Example 3 |
|---|---|---|---|---|
| | Capacity retention rate (%, @150-th cycle) | Initial resistance (mΩ) | Resistance after 150 cycles (mΩ) | Gas generation amount (µL) |
| Example 1 | 84.1 | 0.78 | 1.94 | 760 |
| Example 2 | 82.9 | 0.79 | 2.05 | 790 |
| Example 3 | 83.5 | 0.82 | 2.12 | 720 |
| Example 4 | 83.4 | 0.82 | 1.95 | 770 |
| Comparative Example 1 | 79.0 | 0.92 | 2.42 | 1050 |
| Comparative Example 2 | 81.0 | 0.80 | 1.93 | 845 |
| Comparative Example 3 | 82.5 | 0.80 | 2.02 | 844 |

Referring to Table 1, it can be confirmed that the lithium secondary batteries of Examples 1 to 4 using the non-aqueous electrolyte including the compound represented by Formula 1-A or 1-B simultaneously improve cycle-lifespan performance and resistance properties compared to the lithium secondary batteries of Comparative Examples 1 to3, and significantly reduce the amount of gas generation.

### Experimental Example 4: Metal elution amount evaluation

Charging the secondary batteries of Example 1, and Comparative Examples 1 to 3 to 4.35 V and 1/40 C under the conditions of CC/CV and 0.33 C at 45 °C, and then discharging the same to 2.0 V under the conditions of CC and 0.33 C was set to one cycle, and 150 cycles of the charge/discharge were performed.

Thereafter, an inductively coupled plasma optical emission spectrophotometer (ICP-OES) was used to measure the concentration of all metals eluted in the electrolyte solution. The amounts of metals measured using ICP analysis are shown in Table 2 below.

**[Table 2]**

| | Experimental Example 4 |
|---|---|
| | Metal elution amount (mg/kg, @150-th cycle) |
| Example 1 | 315 |
| Example 4 | 440 |
| Comparative Example 1 | 540 |
| Comparative Example 2 | 525 |
| Comparative Example 3 | 505 |

Referring to Table 2, it can be confirmed that the secondary batteries using the non-aqueous electrolyte solutions of Example 1 and Example 4 significantly reduce the amount of metal elution during cycle charge and discharge compared to the secondary batteries of Comparative Examples 1 to 3.

## Claims

1. A non-aqueous electrolyte comprising:
a lithium salt;
an organic solvent; and
an additive;
wherein the additive comprises at least one compound selected from compounds represented by Formula 1-A and Formula 1-B below: 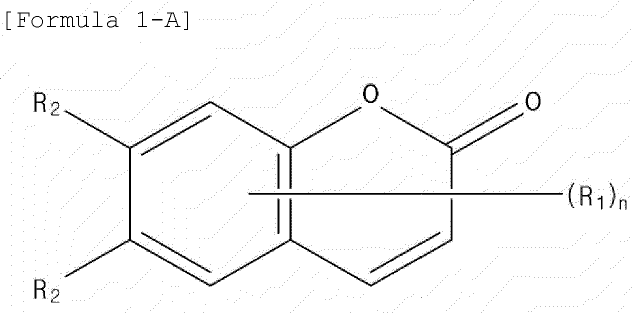 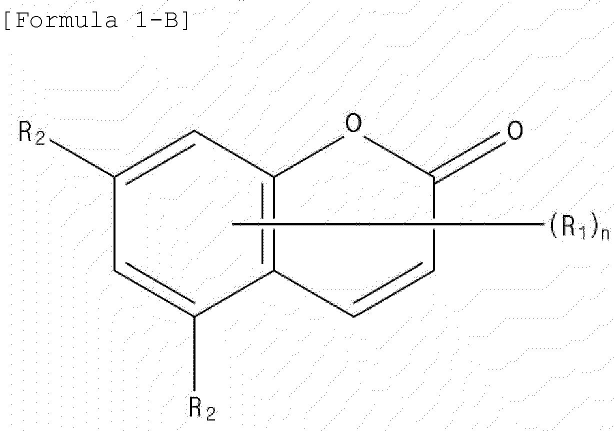
wherein, in Formula 1-A and Formula 1-B,
R₁ is a substituted or unsubstituted alkyl group,
R₂ is a substituent represented by Formula 2 below, and
n is an integer of 0 to 4; 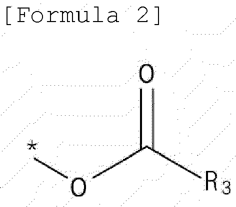
wherein, in Formula 2,
R₃ is selected from an unsubstituted alkyl group having 1 to 10 carbon atoms, an unsubstituted alkenyl group having 2 to 10 carbon atoms, and an unsubstituted alkynyl group having 2 to 10 carbon atoms, and
* is a bonding site.

2. The non-aqueous electrolyte of claim 1, wherein the at least one compound selected from compounds represented by Formula 1-A and Formula 1-B is at least one compound selected from compounds represented by Formula 1-a below, Formula 1-b below, Formula 1-c below, and Formula 1-d below: 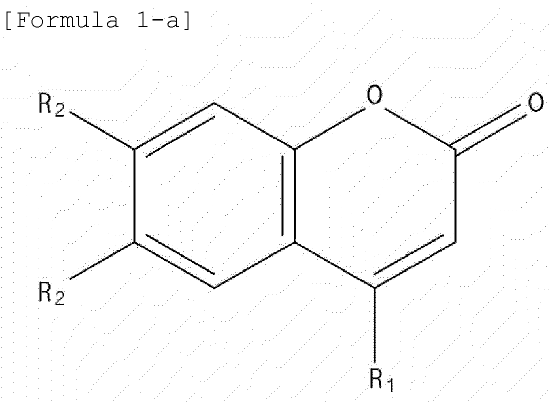 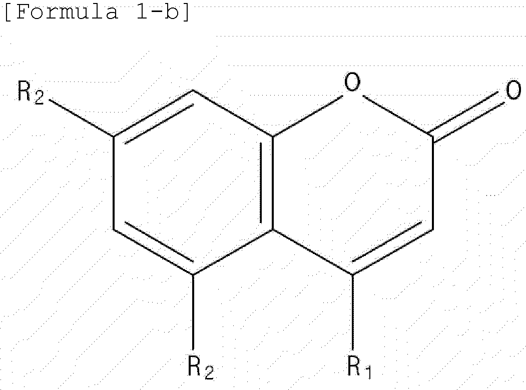 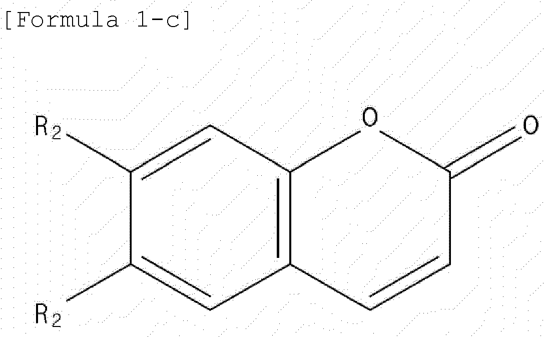 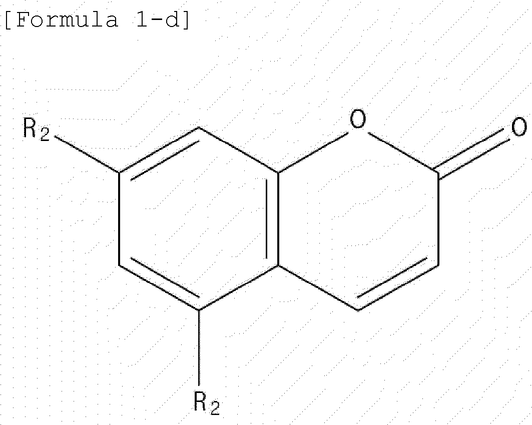 wherein, in Formula 1-a, Formula 1-b, Formula 1-c, and Formula 1-d, R₁ and R₂ are as defined in claim 1.

3. The non-aqueous electrolyte of claim 1, wherein the at least one compound selected from compounds represented by Formula 1-A and Formula 1-B is included in an amount of 0.01 wt% to 10 wt% in the non-aqueous electrolyte.

4. The non-aqueous electrolyte of claim 1, wherein the lithium salt comprises at least one of LiCl, LiBr, LiI, LiBF₄, LiClO₄, LiAlO₄, LiAlCl₄, LiPF₆, LiSbF₆, LiAsF₆, LiB₁₀Cl₁₀, LiB(C₂O₄)₂ (LiBOB), LiCF₃SO₃, LiN(SO₂F)₂(LiFSI), LiCH₃SO₃, LiCF₃CO₂, LiCH₃CO₂, and LiN(SO₂CF₂CF₃)₂ (LiBETI).

5. The non-aqueous electrolyte of claim 1, wherein the lithium salt is included at a molar concentration of 0.5 M to 5.0 M in the non-aqueous electrolyte.

6. The non-aqueous electrolyte of claim 1, wherein the organic solvent comprises at least one of a cyclic carbonate-based organic solvent, a linear carbonate-based organic solvent, a linear ester-based organic solvent, and a cyclic ester-based organic solvent.

7. The non-aqueous electrolyte of claim 1, wherein the additive comprises at least one additional compound selected from vinylene carbonate, vinylethylene carbonate, fluoroethylene carbonate, propane sultone, propene sultone, succinonitrile, adiponitrile, ethylene sulfate, LiPO₂F₂, lithium difluorooxalatoborate (LiODFB), lithium bis-(oxalato)borate (LiBOB), 3-trimethoxysilanyl-propyl-N-aniline (TMSPa), and tris(trimethylsilyl)phosphite (TMSPi).

8. A lithium secondary battery comprising:
a positive electrode including a positive electrode active material;
a negative electrode including a negative electrode active material;
a separator interposed between the positive electrode and the negative electrode; and
a non-aqueous electrolyte according to claim 1.

9. The lithium secondary battery of claim 8, wherein the positive electrode active material comprises a hyper-lithium manganese-rich oxide containing 50 mol% or greater of Mn among all metals excluding lithium, and having a molar ratio of lithium to transition metals greater than 1.

10. The lithium secondary battery of claim 9, wherein the hyper-lithium manganese-rich oxide is a compound represented by Formula 6 below:
[Formula 6] Li₁₊ₛ[NiₜCoᵤMnᵥM¹_{w}]O_{2+z}
wherein, in Formula 6, M¹ is one or more of W, Cu, Fe, V, Cr, Ti, Zr, Zn, Al, In, Ta, Y, La, Sr, Ga, Sc, Gd, Sm, Ca, Ce, Nb, Mg, B, and Mo, 0.05≤s≤1, 0≤t≤0.5, 0≤u≤0.3, 0.5≤v<1.0, 0≤w≤0.2, and 0≤z≤1.

## Patentansprüche

1. Nichtwässriger Elektrolyt, umfassend:
ein Lithiumsalz;
ein organisches Lösungsmittel; und
ein Additiv;
worin das Additiv mindestens eine Verbindung umfasst, ausgewählt aus Verbindungen, die durch die nachstehenden Formel 1-A und Formel 1-B dargestellt werden: 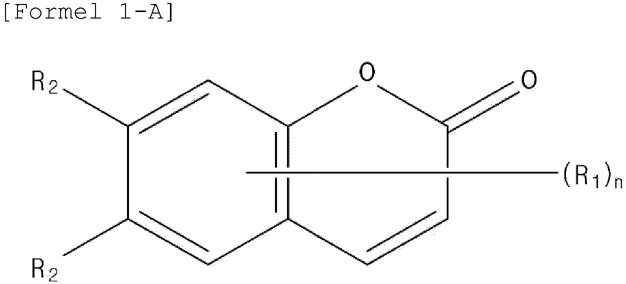 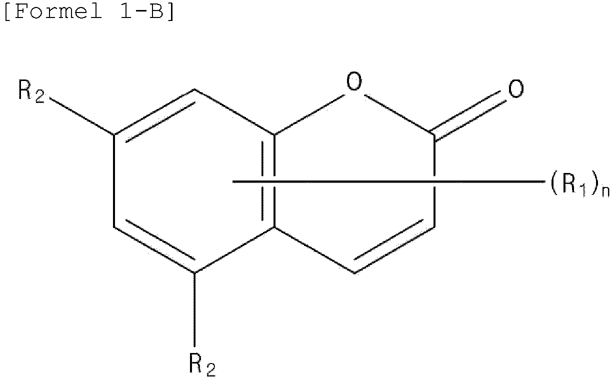
worin in Formel 1-A und Formel 1-B
R₁ eine substituierte oder unsubstituierte Alkylgruppe ist,
R₂ ein durch die nachstehende Formel 2 dargestellter Substituent ist, und
n eine ganze Zahl von 0 bis 4 ist; 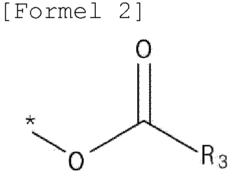
worin in Formel 2
R₃ ausgewählt ist aus einer unsubstituierten Alkylgruppe mit 1 bis 10 Kohlenstoffatomen, einer unsubstituierten Alkenylgruppe mit 2 bis 10 Kohlenstoffatomen und einer unsubstituierten Alkinylgruppe mit 2 bis 10 Kohlenstoffatomen, und
* eine Bindungsstelle darstellt.

2. Nichtwässriger Elektrolyt gemäß Anspruch 1, worin die mindestens eine Verbindung, ausgewählt aus Verbindungen, die durch die Formel 1-A und die Formel 1-B dargestellt werden, mindestens eine Verbindung ist, ausgewählt aus Verbindungen, die durch die nachstehende Formel 1-a, die nachstehende Formel 1-b, die nachstehende Formel 1-c und die nachstehende Formel 1-d dargestellt werden: 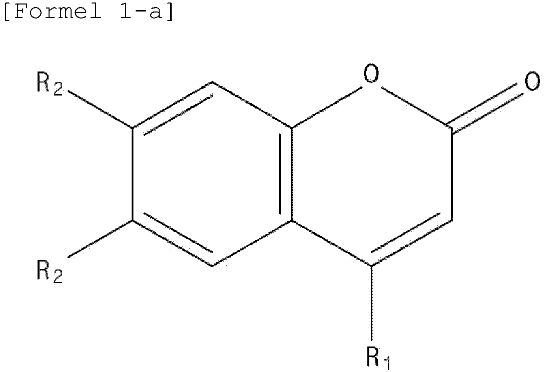 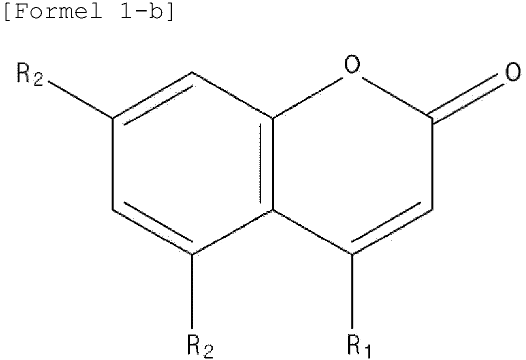 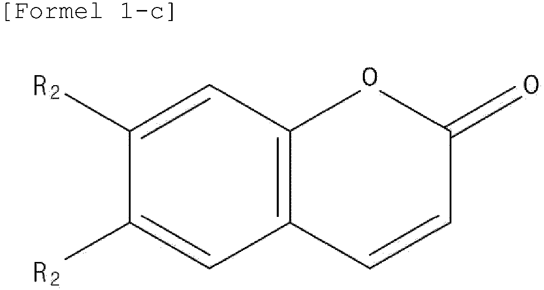 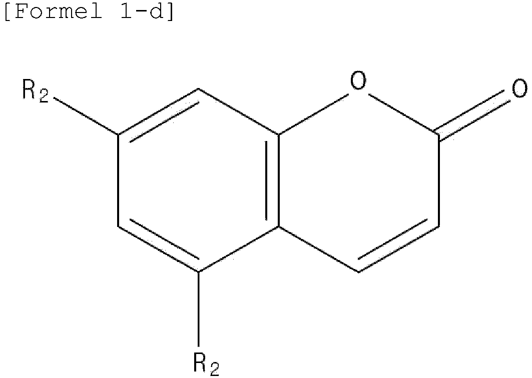 worin in Formel 1-a, Formel 1-b, Formel 1-c und Formel 1-d R₁ und R₂ wie in Anspruch 1 definiert sind.

3. Nichtwässriger Elektrolyt gemäß Anspruch 1, worin die mindestens eine Verbindung, ausgewählt aus Verbindungen, die durch die Formel 1-A und die Formel 1-B dargestellt werden, in einer Menge von 0,01 Gew.-% bis 10 Gew.-% in dem nichtwässrigen Elektrolyten enthalten ist.

4. Nichtwässriger Elektrolyt gemäß Anspruch 1, worin das Lithiumsalz mindestens eines aus LiCl, LiBr, LiI, LiBF₄, LiClO₄, LiAlO₄, LiAlCl₄, LiPF₆, LiSbF₆, LiAsF₆, LiB₁₀Cl₁₀, LiB(C₂O₄)₂ (LiBOB), LiCF₃SO₃, LiN(SO₂F)₂ (LiFSI), LiCH₃SO₃, LiCF₃CO₂, LiCH₃CO₂ und LiN(SO₂CF₂CF₃)₂ (LiBETI) umfasst.

5. Nichtwässriger Elektrolyt gemäß Anspruch 1, worin das Lithiumsalz in einer molaren Konzentration von 0,5 M bis 5,0 M in dem nichtwässrigen Elektrolyten enthalten ist.

6. Nichtwässriger Elektrolyt gemäß Anspruch 1, worin das organische Lösungsmittel mindestens eines aus einem organischen Lösungsmittel auf Basis eines cyclischen Carbonats, einem organischen Lösungsmittel auf Basis eines linearen Carbonats, einem organischen Lösungsmittel auf Basis eines linearen Esters und einem organischen Lösungsmittel auf Basis eines cyclischen Esters umfasst.

7. Nichtwässriger Elektrolyt gemäß Anspruch 1, worin das Additiv mindestens eine weitere Verbindung umfasst, ausgewählt aus Vinylencarbonat, Vinylethylencarbonat, Fluorethylencarbonat, Propansulton, Propensulton, Succinonitril, Adiponitril, Ethylensulfat, LiPO₂F₂, Lithiumdifluorooxalatoborat (LiODFB), Lithiumbis-(oxalato)borat (LiBOB), 3-Trimethoxysilanyl-propyl-N-anilin (TMSPa) und Tris(trimethylsilyl)phosphit (TMSPi).

8. Lithiumsekundärbatterie, umfassend:
eine Positivelektrode, die ein Positivelektrodenaktivmaterial enthält;
eine Negativelektrode, die ein Negativelektrodenaktivmaterial enthält;
einen Separator, der zwischen der Positivelektrode und der Negativelektrode angeordnet ist; und
einen nichtwässrigen Elektrolyten gemäß Anspruch 1.

9. Lithiumsekundärbatterie gemäß Anspruch 8, worin das Positivelektrodenaktivmaterial ein hyperlithiumhaltiges, manganreiches Oxid umfasst, das 50 Mol-% oder mehr Mn unter allen Metallen ausgenommen Lithium enthält, und ein Molverhältnis von Lithium zu Übergangsmetallen von mehr als 1 aufweist.

10. Lithiumsekundärbatterie gemäß Anspruch 9, worin das hyperlithiumhaltige, manganreiche Oxid eine Verbindung ist, die durch die nachstehende Formel 6 dargestellt wird:
[Formel 6] Li₁₊ₛ[NiₜCoᵤMnᵥM¹_{w}]O_{2+z}
worin in Formel 6 M¹ eines oder mehrere aus W, Cu, Fe, V, Cr, Ti, Zr, Zn, Al, In, Ta, Y, La, Sr, Ga, Sc, Gd, Sm, Ca, Ce, Nb, Mg, B und Mo ist, 0,05 ≤ s ≤ 1, 0 ≤ t ≤ 0,5, 0 ≤ u ≤ 0,3, 0,5 ≤ v < 1,0, 0 ≤ w ≤ 0,2 und 0 ≤ z ≤ 1 ist.

## Revendications

1. Électrolyte non aqueux comprenant :
un sel de lithium ;
un solvant organique ; et
un additif ;
dans lequel l'additif comprend au moins un composé choisi parmi des composés représentés par la formule 1-A et la formule 1-B ci-dessous : 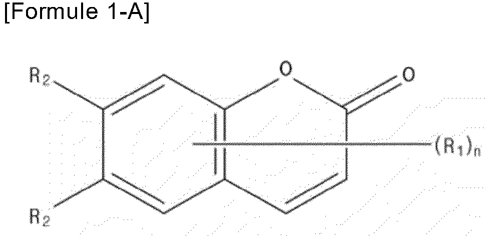 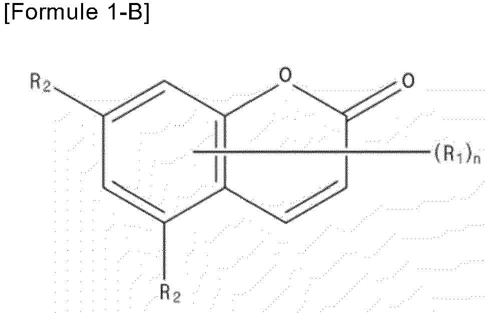
dans lequel, dans la formule 1-A et la formule 1-B,
R₁ est un groupe alkyle substitué ou non substitué,
R₂ est un substituant représenté par la formule 2 ci-dessous, et
n est un entier de 0 à 4 ; 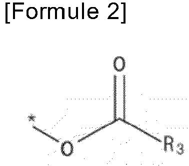
dans lequel, dans la Formule 2,
R₃ est choisi parmi un groupe alkyle non substitué ayant 1 à 10 atomes de carbone, un groupe alcényle non substitué ayant 2 à 10 atomes de carbone, et un groupe alcynyle non substitué ayant 2 à 10 atomes de carbone, et
* est un site de liaison.

2. Électrolyte non aqueux selon la revendication 1, dans lequel au moins un composé choisi parmi des composés représentés par la formule 1-A et la formule 1-B est au moins un composé sélectionné parmi des composés représentés par la formule 1-a ci-dessous, la formule 1-b ci-dessous, la formule 1-c ci-dessous, et la formule 1-d ci-dessous : 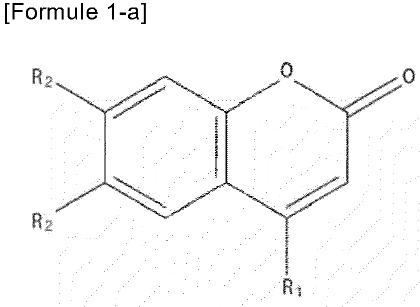 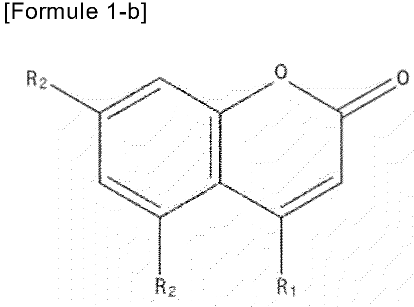 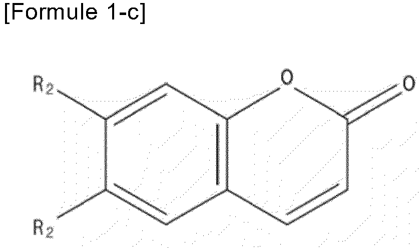 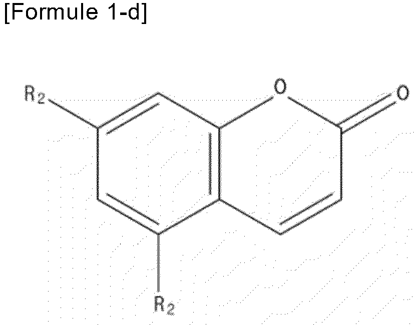 dans lequel, dans la formule 1-a, la formule 1-b, la formule 1-c, et la formule 1-d, R₁ et R₂ sont tels que définis dans la revendication 1.

3. Électrolyte non aqueux selon la revendication 1, dans lequel au moins un composé sélectionné parmi des composés représentés par la formule 1-A et la formule 1-B est compris dans une quantité de 0,01 % en poids à 10 % en poids dans l'électrolyte non aqueux.

4. Électrolyte non aqueux selon la revendication 1, dans lequel le sel de lithium comprend au moins un de LiCl, LiBr, Lil, LiBF₄, LiClO₄, LiAlO₄, LiAlCl₄, LiPF₆, LiSbF₆, LiAsF₆, LiB₁₀Cl₁₀, LiB(C₂O₄)₂ (LiBOB), LiCF₃SO₃, LiN(SO₂F)₂ (LiFSI), LiCH₃SO₃, LiCF₃CO₂, LiCH₃CO₂, et LiN (SO₂CF₂CF₃)₂ (LiBETI).

5. Électrolyte non aqueux selon la revendication 1, dans laquelle le sel de lithium est inclus à une concentration molaire comprise entre 0,5 M et 5,0 M dans l'électrolyte non aqueux.

6. Électrolyte non aqueux selon la revendication 1, dans lequel le solvant organique comprend au moins l'un d'un solvant organique à base de carbonate cyclique, d'un solvant organique à base de carbonate linéaire, d'un solvant organique à base d'ester linéaire et d'un solvant organique à base d'ester cyclique.

7. Électrolyte non aqueux selon la revendication 1, dans lequel l'additif comprend au moins un composé supplémentaire choisi parmi le carbonate de vinylène, le carbonate de vinyléthylène, le carbonate de fluoroéthylène, la sultone de propane, la sultone de propène, le succinonitrile, l'adiponitrile, le sulfate d'éthylène, LiPO₂F₂, le difluorooxalatoborate de lithium (LiODFB), le bis(oxalato)borate de lithium (LiBOB), la 3-triméthoxysilanyl-propyl-N-aniline (TMSPa), et le phosphite de tris (triméthylsilyle) (TMSPi).

8. Batterie secondaire au lithium comprenant :
une électrode positive incluant un matériau actif d'électrode positive ;
une électrode négative incluant un matériau actif d'électrode négative ;
un séparateur interposé entre l'électrode positive et l'électrode négative ; et
un électrolyte non aqueux selon la revendication 1.

9. Batterie secondaire au lithium selon la revendication 8, dans laquelle le matériau actif d'électrode positive comprend un oxyde hyperlithié riche en manganèse contenant 50 % en moles ou plus de Mn parmi tous les métaux à l'exclusion du lithium, et ayant un rapport molaire du lithium aux métaux de transition supérieur à 1.

10. Batterie secondaire au lithium selon la revendication 9, dans laquelle l'oxyde hyper-lithié riche en manganèse est un composé représenté par la Formule 6 ci-dessous :
[Formula 6] Li₁₊ₛ[NiₜCoᵤMnᵥM¹_{w}]O_{2+z}
dans lequel, dans la formule 6, M¹ est un ou plus parmi W, Cu, Fe, V, Cr, Ti, Zr, Zn, Al, In, Ta, Y, La, Sr, Ga, Sc, Gd, Sm, Ca, Ce, Nb, Mg, B, et Mo, 0,05≤s≤1, 0≤t≤0,5, 0≤u≤0,3, 0,5≤v<1,0, 0≤w≤0,2, et 0≤z≤1.
